# EUROPEAN PATENT APPLICATION

(11) **EP 1 460 836 A2**
(43) Date of publication of application: **22.09.2004**
(21) Application number: 04006718.3
(22) Date of filing: 19.03.2004
(51) Int. Cl.: H04N 5/225

(54) **Camera lens unit in a portable wireless terminal**

(30) Priority: 19.03.2003 KR 2003017055; 08.03.2004 KR 2004015396
(71) Applicant: Samsung Electronics Co., Ltd., Suwon-si, Gyeonggi-do (KR)
(72) Inventor: Lee, Sang-Min, Yeongtong-gu Suwon-si Gyeonggi-do (KR)
(74) Representative: Grünecker, Kinkeldey, Stockmair & Schwanhäusser Anwaltssozietät

(57) **Abstract**

A camera lens unit in a portable wireless terminal is disclosed, in which the terminal has a main body and a folder. The main body has side arms facing each other at both upper sides, and the folder has a center hinge arm with an opening at a predetermined position, hinge-combined between the side hinge arms. In the camera lens unit, a hinge dummy has an end fixed to one of the side hinge arms and is inserted from an end of the center hinge arm to an end of the opening, for rotatable engagement with the center hinge arm. A camera holder is rotatably engaged with the other end of the hinge dummy. A camera lens has an end fixed to the camera holder, is disposed in the opening, and rotates with the camera holder about a hinge axis, so that an angle of view is controlled.

## Description

### BACKGROUND OF THE INVENTION

### 1. Field of the Invention

The present invention relates generally to a portable wireless terminal, and in particular, to a camera lens assembly in a portable wireless terminal.

### 2. Description of the Related Art

Along with the development of the information industry, portable wireless terminals equipped with various functions and having various shapes have been put on the market. The portable wireless terminals are generally categorized into a bar type, a flip type having a flip cover, and a folder type having a folder rotatable to a predetermined angle.

Those terminals are equipped with various other functions in addition to the basic function of voice call, such as e-mail, data transmission, Internet games, and text transmission. As new communication technologies including CDMA 1x evolution-data only (EV-DO) have recently been introduced, the terminals provide a wider range of services such as video call and transmission of moving pictures. Therefore, a camera lens unit becomes essential to a portable wireless terminal.

The trend toward small, lightweight portable wireless terminals, however, makes it difficult to secure room for installing a camera lens unit in a terminal. Moreover, the difficulty in installing a flexible printed circuit for electrically connecting the camera lens to the terminal increases assembly time and thus product cost.

### SUMMARY OF THE INVENTION

It is, therefore, an object of the present invention to provide a camera lens unit for a portable wireless terminal that occupies less space and is easily assembled.

### This object is achieved by a camera lens unit according to claim 1. Advantageous embodiments are achieved according to the dependent claims and combination thereof.

The above object is achieved by a camera lens. unit in a portable wireless terminal. The terminal has a main body and a folder.

The main body has side arms facing each other at both upper sides, and the folder has a center hinge arm with an opening at a predetermined position, hinge-combined between the side hinge arms.

According to one aspect of the present invention, in a camera lens unit, a hinge dummy has an end fixed to one of the side hinge arms and is inserted from an end of the center hinge arm to an end of the opening, for rotatable engagement with the center hinge arm. A camera holder is rotatably engaged with the other end of the hinge dummy. A camera lens has an end fixed to the camera holder, is disposed in the opening, and rotates with the camera holder about a hinge axis, so that an angle of view is controlled.

According to another aspect of the present invention, a hinge dummy has an end fixed to one of the side hinge arms and is inserted from an end of the center hinge aim to an end of the opening, for rotatable engagement with the center hinge arm. A camera holder is rotatably engaged with the other end of the hinge dummy. A camera lens has an end fixed to the camera holder, is disposed in the opening, and rotates with the camera holder about a binge axis, so that an angle of view is controlled. This camera lens unit is supported by a hinge module. The hinge module is installed at the other end of the center hinge arm and has a hinge protrusion protruding from the other end of the center hinge arm, for rotatably combining the main body with the folder, and a support protrusion protruding to the other end of the opening, for rotatably supporting the other end of the camera lens,

### BRIEF DESCRIPTION OF THE DRAWINGS

The above and other objects, features and advantages of the present invention will become more apparent from the following detailed description when taken in conjunction with the accompanying drawings in which:
FIG 1 is a perspective view of a portable wireless terminal equipped with a camera lens unit according to a preferred embodiment of the present invention;
FIG. 2 is an exploded perspective view of some of the components of the camera lens unit illustrated in FIG 1;
FIG 3 is an exploded perspective view of some of the components of the camera lens unit to be assembled to the portable wireless terminal, as seen from a different direction;
FIG 4 is an exploded perspective view of some of the components of the camera lens unit illustrated in FIGS. 2 and 3;
FIG. 5 is a exploded perspective view of the camera lens unit being combined with the portable wireless terminal;
FIG. 6 is an exploded perspective view of a camera lens unit in the portable wireless terminal according to another preferred embodiment of the present invention; and
FIG 7 is an exploded perspective view of a camera lens unit in the portable wireless terminal according to a third preferred embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail to avoid obscuring the invention with unnecessary detail.

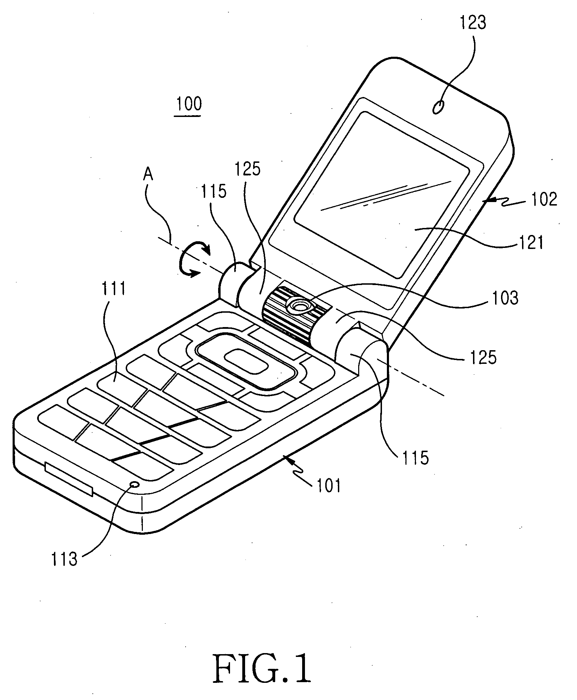

FIG. 1 is a perspective view of a portable wireless terminal 100 equipped with a camera lens unit according to a preferred embodiment of the present invention. Referring to FIG 1, the portable wireless terminal 100 is comprised of a main body 101 and a folder 102 that is hinge-combined with the main body 101 by side hinge arms 115 and a center hinge arm 125, and thus rotatably opened and closed. A camera lens 103 is installed using the side hinge arms 115 and the center hinge arm 125.

The main body 101 includes a keypad 111 for invoking functions, selecting menus, and entering data, a transmitter 113 with a microphone built therein under the keypad 111, on its front surface. The side hinge arms 115 are formed face to face at respective sides of an upper portion of the main body 101.

The center hinge arm 125 is formed between the side hinge arms 115 in a lower portion of the folder 102. A display 121 and a receiver 123 having a speaker built therein are disposed on a front surface of the folder 102 facing the front surface of the main body 101.

An opening is formed in center hinge arm 125, preferably at a center position of the center hinge arm 125, along a hinge axis A in order to accommodate the camera lens 103. Since FIG 1 illustrates the camera lens 103 already installed in the portable wireless terminal 100, the opening is shown as being occupied by the camera lens 103.

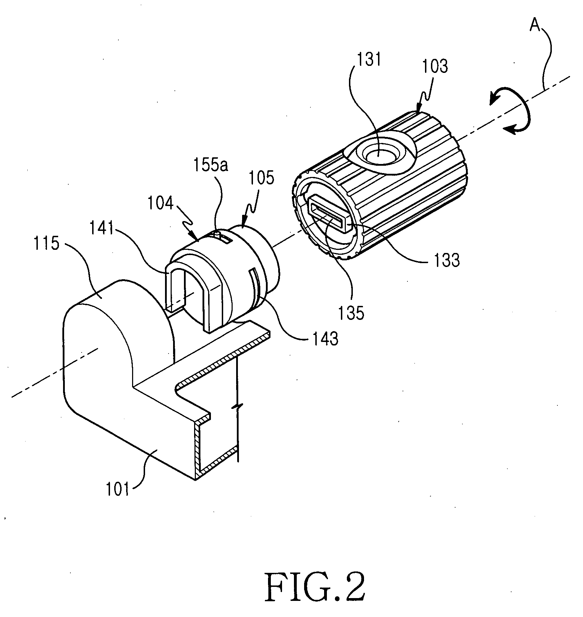

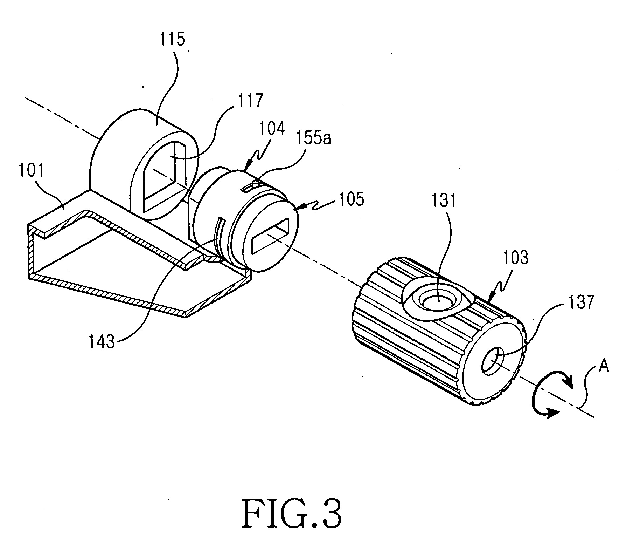

FIGS. 2, 3 and 4 are exploded perspective views of the components of the camera lens unit to be assembled to the portable wireless terminal 101. For illustrative purposes, the center hinge arm 125, into which hinge dummy 104 in installed, is not shown in FIGS. 2, 3 or 4.

Referring to FIGS. 2, 3 and 4, the camera lens unit includes the camera lens 103, a hinge dummy 104, and a camera holder 105. The camera lens 103 is combined rotatably with the portable wireless terminal 100 by the hinge dummy 104 and the camera holder 105. An exposure window 131 is formed on the camera lens 103. A fixing protrusion 133 protrudes from an end portion of the camera lens 103, and a support hole 137 is formed into the other end portion thereof. A through hole 135 is formed into the fixing protrusion 133 to communicate both inside and outside the camera lens 103. Though not shown, a flexible printed circuit for electrically connecting the camera lens 103 to a main board of the terminal 100 is drawn through the through hole 135.

The hinge dummy 104 is combined fixedly with a side hinge arm 115 and rotatably with the center hinge arm 125. Thus, the hinge dummy 104 is used to provide a hinge connection between the main body 101 and the folder 102. The hinge dummy 104 also defines a space through which the flexible printed circuit (not shown) passes to electrically connect the display 121 and the receiver 123 to the main board of the main body 101.

The hinge dummy 104 is preferably cylindrical in shape. An angular fixture 141 is formed on a first end of the hinge dummy 104. The angular fixture 141 of the hinge dummy 104 fits into a passing hole 117 of side hinge arm 115 to fixedly combine the hinge dummy 104 to the main body 101 and to allow the flexible printed circuit (not shown) to be inserted into the side hinge arm. A through hole is preferably formed through the hinge dummy 104 along the hinge axis A in order to define a path in which the flexible printed circuit for electrically connecting the camera lens 103 to the main board passes.

A sliding guide 143 is formed in an inner circumferential surface of the hinge dummy 104, extending along the circumferential direction at a second end of the hinge dummy 104. The sliding guide 143 is preferably defined within a predetermined angle range to restrict the rotation of the camera lens 103. The angle range is determined by the angle of view of the camera lens 103. The sliding guide 143 may be formed as a slot that communicates both inside and outside the hinge dummy 104.

A plurality of grooves 145 are spaced equiangularly about the hinge axis A on the inner circumferential surface of the hinge dummy 104, preferably between the sliding guide 143 and the second end of the hinge dummy 104.

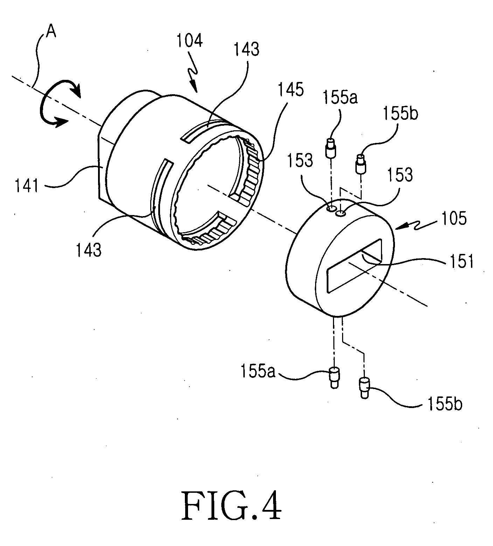

The camera holder 105 is rotatably combined with the second end of the hinge dummy 104. As shown in Fig. 4, the camera holder 105 has a fixing hole 151 formed along the hinge axis A, into which the fixing protrusion 133 of the camera lens 103 is fixedly inserted, and pin holes 153 on an outer circumferential surface thereof. Guide pins 155a and contact pins 155b are fixedly inserted into the pin holes 153. The ends of the guide pins 155a and the contact pins 155b are extendable and retractable by a predetermined elastic force. One of the guide pins 155a can be formed integrally with the camera holder 105, or by injection molding. In this case, this guide pin 155a cannot be retracted within the outer circumferential surface of the camera holder 105.

The guide pins 155a regulate the rotation of the camera holder 104 along the sliding guide 143. When the camera holder 105 is combined with the second end of the hinge dummy 104, the ends of the guide pins 155a protrude into the sliding guide 143.

The contact pins 155b contact the grooves 145 on the inner circumferential surface of the hinge dummy 104. Since the ends of the contact pins 155b can extend and retract by elastic force, they offer a feeling of click to a user, as they contact the grooves 145. Meanwhile, since the contact pins 155b exert a contracting force against the inner circumferential surface of the hinge dummy 104 by the elastic force, it is preferred to fixedly space at least two contact pins 155b equiangularly around the outer circumferential surface of the camera holder 105, to thereby prevent concentrated elastic force from abrading or damaging part of the camera holder 105 or the hinge dummy 104. Two contact pins 155b spaced by 180 degrees on the camera holder 105 are illustrated in FIG. 4.

The camera holder 105 is rotatably combined with the second end of the hinge dummy 104 and the camera lens 103 is fixed to the camera holder 105. Thus, the camera lens 103 rotates with the camera holder 105 about the hinge axis A. That is, the user can rotate the camera lens 103 in a direction as he chooses.

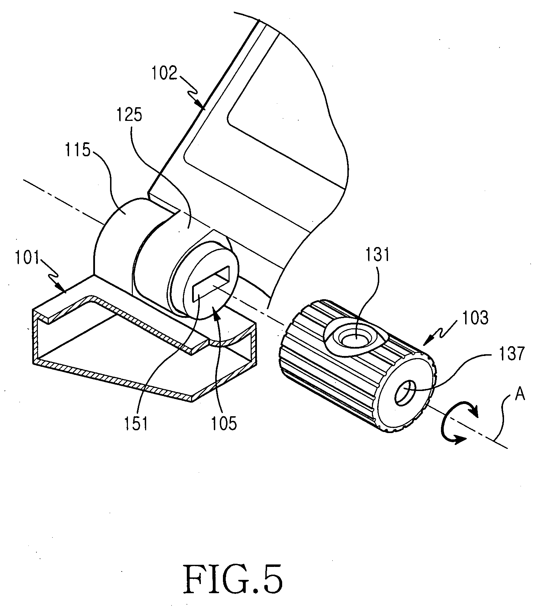

FIG. 5 is a perspective view of the camera lens 103 being combined with the terminal 100. As described above, with the angular fixture 141 serves as a fixing protrusion for the hinge dummy 104 to be fixed to the side hinge arm 115, the center hinge arm 125 is combined with the hinge dummy 104 and the second end of the hinge dummy 104 is engaged with the camera holder 105. Therefore, only the camera holder 105 is exposed from the center hinge arm 125 in FIG 5. Returning to the assembled view provided in FIG 1, the camera lens 103 is rotatably installed at the center of the terminal 100, specifically in the center hinge arm 125, and the rotating axis of the camera lens 103 is identical to the hinge axis A being the rotation center of the folder 102.

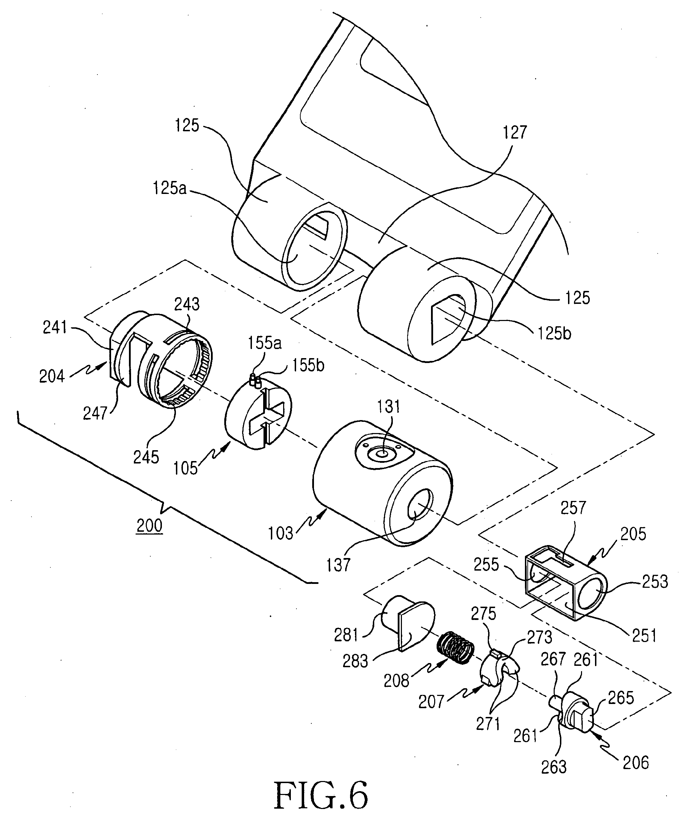

) FIG. 6 is an exploded perspective view of a camera lens unit 200 in the portable wireless terminal according to another embodiment of the present invention. Referring to FIG. 6, the camera lens unit 200 is comprised of the camera lens 103, a hinge dummy 204, and the camera holder 105. The camera lens 103 is disposed in an opening 127 between two half portions (i.e. first and second half portions) of the center hinge arm 125, supported by a hinge module at one end thereof. The camera lens 103 and the camera holder 105 are the same as those in the first embodiment and thus will not be described here in detail.

The hinge dummy 204 is fixed to a side hinge arm 115, while it is inserted from an end of the first half portion of the center hinge arm 125 into the opening 127 via a through hole 125a and rotatably combined with the center hinge arm 125. Thus, the hinge dummy 204 is used to provide a hinge-connection between the main body 101 and the folder 102. The hinge dummy 204 has a guide hole 247 through which an other flexible printed circuit (not shown) for electrically connecting the display 121 and the receiver 123 of the folder 102 to the main board of the main body 101 passes. The guide hole 247 extends from a predetermined position of the outer circumferential surface of the hinge dummy 204 along a circumferential direction, thereby communicating both inside and outside the hinge dummy 204. It will be recognized that the side hinge arm 115 which is rotatably connected by the hinge dummy 204 is preferably constructed to include a passing hole 117, to allow the flexible printed circuit (not shown in FIG. 6) to be inserted into the side hinge arm, as described in the first embodiment, above. The hinge dummy 204 is fixed to the side hinge arm 115 (passing hole 117).

The hinge dummy 204 is preferably cylindrical. An angular fixture 241 is formed on a first end of the hinge dummy 204 and fixed to the side hinge arm 115. A through hole is preferably formed through the hinge dummy 204 along the hinge axis A in order to define a path in which the flexible printed circuit for electrically connecting the camera lens 103 to the main board passes.

A sliding guide 243 extends along the circumferential direction at a second end of the hinge dummy 204. The sliding guide 243 is preferably defined within a predetermined angle range to restrict the rotation of the camera lens 103. The angle range is determined by the angle of view of the camera lens 103. The sliding guide 243 may be formed into the shape of a slot that communicates both inside and outside the hinge dummy 204.

A plurality of grooves 245 are spaced equiangularly about the hinge axis A on the inner circumferential surface of the hinge dummy 204 between the sliding guide 243 and the other end of the hinge dummy 204. As the camera holder 105 rotates, the grooves 245 offer a feeling of click to the user.

A support protrusion 281 protrudes from the second half portion of the center hinge arm 125 into the opening 127. The support protrusion 281 is inserted into the through hole 137 of the camera lens 103, thereby supporting the rotation of the camera lens 103. To facilitate insertion of the camera lens 103 into the opening 127, the support protrusion 281 preferably is retractable from the opening 127 into the second half portion of the center hinge arm 125. This can be realized by use of the hinge module that rotatably combines the main body 101 with the folder 102.

A hole 125b of a predetermined shape is formed in the second half portion of the center hinge arm 125 to accommodate the hinge module. The hinge module includes a hinge housing 205, a hinge shaft 206, a hinge cam 207, and a coil spring 208.

A space 251 is defined in the hinge housing 205 to accommodate the hinge shaft 206, the hinge cam 207 and the coil spring 208. Through holes 253 and 255 are formed into both ends of the hinge housing 205. A guide hole 257 extends lengthwise on a side wall of the hinge housing 205.

Two peak portions 261 alternate with two valley portions 263, equiangularly spaced from each other on an end of the hinge shaft 206 and a hinge protrusion 265 protrudes from the other end thereof to be engaged with a side hinge arm 115. The hinge shaft 206 presses an inner wall of the hinge housing 205, rotating within the hinge housing, with the peak portions 261 alternate with two valley portions 263, hinge protrusion 265 protruding through the through hole 253.

On an end of the hinge cam 207, two peak portions alternate with two valley portions 273, equiangularly spaced from each other in correspondence with the valley portions 263 and the peak portions 261 of the hinge shaft 206. A guide protrusion 275 is formed on the outer circumferential surface of the hinge cam 207, in correspondence with the guide hole 257 of the hinge housing 205. The hinge cam 207 moves linearly in the hinge housing 205 and the guide protrusion 275 guides the linear reciprocation of the hinge cam 207, linearly reciprocating within the guide hole 257.

Meanwhile, a rotating protrusion 267 protrudes from an end of the hinge shaft 206 and a rotating hole is defined in the hinge cam 207, for accommodating the rotating protrusion 267. Thus, the rotation of the hinge shaft 206 and the linear reciprocation of the hinge cam 207 are more stable.

The coil spring 208 provides elastic force to make a close contact between the hinge shaft 206 and the hinge cam 207. Therefore, as the hinge shaft 206 rotates by an external force, the rotation force is exerted such that the peak portions 261 of the hinge shaft 206 are closely engaged with the valley portions 273 of the hinge cam 207. For details of the hinge module, refer to U.S. Patent No. 6,292,980, issued to the Samsung Electronics Co., Ltd. on September 25, 2001.

The support protrusion 281 can be accommodated in the hinge module. A support plate 283 extends from an end of the support protrusion 281 in a direction parallel the through hole. The support plate 283 is interposed between the other inner wall of the hinge housing 205 and the coil spring 208 with the support protrusion 281 protruding through the through hole 255 of the hinge housing 205. When the hinge module is inserted into the hole 125b through the second half portion of the center hinge arm 125, the support protrusion 281 protrudes into the opening 127.

Accordingly, the elastic force of the coil spring 208 in the hinge housing 205 allows the support protrusion 281 to move through the other end of the opening 127, thereby facilitating assembly of the camera lens 103.

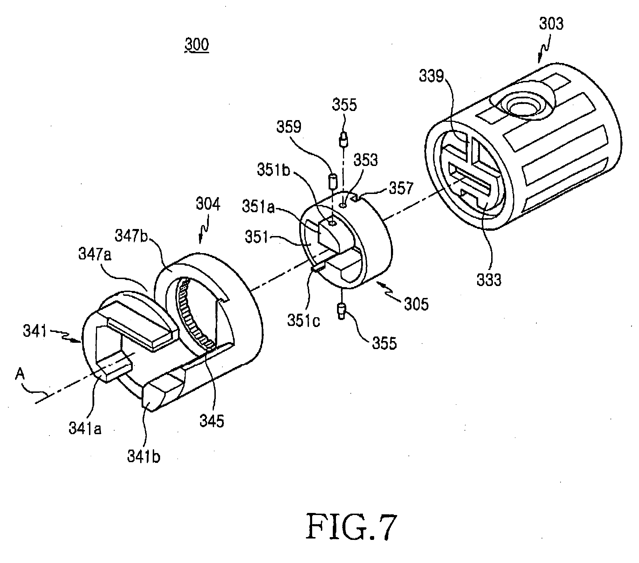

FIG 7 is an exploded perspective view of a camera lens unit 300 in the portable wireless terminal according to a third preferred embodiment of the present invention. As illustrated in FIG. 7, the camera lens unit 300 is comprised of a camera lens 303, a hinge dummy 304, and a camera holder 305.

The camera lens 303 is provided, at an end portion thereof, with a fixing protrusion 333 and an engaging rib 339. The fixing protrusion 333 and the engaging rib 339 fix the camera holder 305 to the end portion of the camera lens 303.

The hinge dummy 304 is cylindrical. The hinge dummy 304 has a fixing end 341 formed at a first end thereof, to be fixedly engaged with a side hinge arm of a main body. The fixing end 341 includes a fixing rib 341a and a protrusion 341b, each protruding from the first end of the hinge dummy 304. Unlike the first and second embodiments of the present invention, the protrusion 341b is additionally provided so that the hinge dummy 304 is firmly fixed onto the side hinge arm of the main body.

A plurality of grooves 345 are spaced equiangularly about the hinge axis A on an inner circumferential surface of a second end of the hinge dummy 304. A guide hole 347a extends around an outer circumferential surface of the hinge dummy 304, to thereby define a space through which a flexible printed circuit passes to electrically connect a display disposed in a folder and a receiver to a main board of the main body.

The camera holder 305 is rotatably combined with the second end of the hinge dummy 304. The camera holder 305 is provided with a fixing hole 351 formed along the hinge axis A, into which the fixing protrusion 333 of the camera lens 303 is fixedly inserted, and at a surface thereof, with an engaging hole 357 extending in a radius direction from the fixing hole 351 to an outer circumferential surface of the camera holder 305. The engaging hole 357 is engaged with the engaging rib 339, thereby determining the position where the camera holder 305 is assembled to the camera lens 303. For fixing the camera holder 305 to the camera lens 303, the fixing hole 351 is not circular and the fixing protrusion 333 is shaped in correspondence with the fixing hole 351.

A pin hole 353 is formed on the outer circumferential surface of the camera holder 305, and a contact pin 355 is fixedly inserted into the pin hole 353. The end of the contact pin 355 is extendable and retractable by a predetermined elastic force. The contact pin 355 contacts the grooves 345 on the inner circumferential surface of the hinge dummy 304. Since the end of the contact pin 355 can extend and retract by elastic force, it offers a feeling of click to a user, as it contacts the grooves 345.

Meanwhile, since the contact pin 355 exerts a contracting force against the inner circumferential surface of the hinge dummy 304 by the elastic force, it is preferred to fixedly space at least two contact pins 355 equiangularly around the outer circumferential surface of the camera holder 305, to thereby prevent concentrated elastic force from abrading or damaging part of the camera holder 305 or the hinge dummy 304.

The camera holder 305 is provided, at a surface thereof, with a rotational guide 351a and a guide rib 351c. The rotational guide 351a and the guide rib 351c are inserted into the second end of the hinge dummy 304 to guide rotation of the camera holder 305. To prevent the camera holder 305 from slipping off from the hinge dummy 304, a pin hole 351b is formed on an outer circumferential surface of the rotational guide 351a, and a fixing pin 359 is fixedly inserted into the pin hole 351b. The fixing pin 359 exerts a contracting force against a side wall 347b of the guide hole 347a so as to prevent the camera holder 305 from slipping off from the hinge dummy 304. Along with rotation of the camera holder 305, the fixing pin 359 moves along the side wall 347b, while its movement range is limited by both ends of the side wall 347b. Thus, the rotation of the camera lens 303 is also restricted.

The camera lens unit 300 sets a position where the camera holder 305 is engaged with the camera lens 303 by use of the engaging rib 339 and the engaging hole 357, thereby improving its assembly. The additional use of the protrusion 341b at the fixing end 341 of the hinge dummy 304 reinforces fixing of the hinge dummy 304. Also, the single fixing pin 359 substitutes for a plurality of guide pins used in the aforedescribed first and second embodiments in order to prevent the slip-off of the camera holder 305 from the hinge dummy 304. Hence, the assembly process is further improved and manufacture cost is saved.

As described above, a camera lens unit of the present invention is applied to a folder type terminal. The camera lens unit is installed in an opening of a center hinge arm for combining a main body with a folder. Therefore, the space for installing the camera lens unit is easily secured and the terminal is further miniaturized. Since the camera lens unit is rotatably engaged with a hinge dummy used for a hinge-connection between the main body and the folder, it is easily assembled. Furthermore, a plurality of grooves are formed on an inner circumferential surface of the hinge dummy and contact pins are formed on the outer circumferential surface of a camera holder to contact the grooves as the camera holder rotates. Therefore, *as* the camera lens unit rotates, a feeling of click is provided to a user, so that the user can feel the rotation degree of the camera lens unit.

White the invention has been shown and described with reference to certain preferred embodiments thereof, it will be understood by those skilled in the art that various changes in form and details may be made therein in particular by providing variations of the embodiments achieved by combining features of the embodiments without departing from the spirit and scope of the invention as defined by the appended claims.

## Claims

1. A camera lens unit in a portable wireless terminal including a main body (101) and a folder (102), the main body (100) having side hinge arms (115), and the folder (102) having a center hinge arm (125) with an opening and being positioned between the side hinge arms (115), comprising:
a hinge dummy (104) having a first end fixed to one of the side hinge arm (115) and inserted within the center hinge arm (125) with a second end of the hinge dummy (104) facing the opening, for rotatable engagement with the center hinge arm (125); a camera holder (105) rotatably engaged with the second end of the hinge dummy (104); and
a camera lens (103) having an end fixed to the camera holder (104), disposed in the opening, and rotating with the camera holder (105) about a hinge axis, so that an angle of view is controlled.

2. , The camera lens unit according to claim 1, wherein the'center hinge arm (125) has an opening (127) and first and second half portions on either side of the opening (127), hinge-combined between the side hinge arms (115), and wherein
the hinge dummy has the first end fixed to one of the side hinge arms (115) and is inserted within the first half portion of the center hinge arm (125) and has the second end facing the opening (127), and
wherein the camera lens unit is supported by a hinge module installed at the second half portion of the center hinge arm (125), which has a hinge protrusion positioned within the center hinge arm (125), for rotatably combining the main body (101) with the folder (102), and a support protrusion (281) protruding from the opening (127), for rotatably supporting the camera lens (103).

3. The camera lens unit of claims 1 or 2, wherein the hinge dummy (104) includes a sliding guide (143) extending along a circumferential direction on an inner circumferential surface of the hinge dummy (104), and the camera holder (105) includes at least one guide pin (155a) fixed to an outer circumferential surface of the camera holder (105), for sliding along the sliding guide (143) as the camera holder (105) rotates.

4. The camera lens unit of claim 3, wherein the hinge dummy further includes a plurality of grooves (145) spaced equiangularly around the hinge axis on the inner circumferential surface of the hinge dummy (104) between the sliding guide (143) and the second end of the hinge dummy (104), and the camera holder (105) further includes at least one contact pin (155b) formed on the outer circumferential surface of the camera holder (105), for providing a feeling of click by the extension and retraction, via a predetermined elastic force, of the at least one contact pin (155b) contacting the grooves (145) as the camera holder (105) rotates.

5. The camera lens unit of claims 3 or 4, wherein the guide pin (155a) is formed integrally with the camera holder (105).

6. The camera lens unit of claims 3 or 4, wherein the guide pin (155a) is formed to retract in and extend from the outer circumferential surface of the camera holder (105) by an elastic force.

7. The camera lens unit according to one of claims 1 to 6, wherein the camera holder (105) includes a fixing hole that passes through both the first and second ends of the camera holder (105) along the hinge axis and the camera lens (103) includes a fixing protrusion (133) protruding from an end of the camera lens (103), for being inserted into the fixing hole.

8. The camera lens unit of claim 7, wherein the camera lens (103) further includes a through hole (135) that passes through the fixing protrusion (133), so that a flexible printed circuit extended from the camera lens (133) is drawn through the through hole (135).

9. The camera lens unit of claim 8, wherein the hinge dummy (104) includes a passing hole formed along the hinge axis, through which the flexible printed circuit drawn from the camera lens (103) is inserted into the side hinge arm.

10. The camera lens unit of claim 9, wherein the hinge dummy (204) further includes a guide hole (247) through an outer circumferential surface of the hinge dummy (104) along the circumferential direction, for communicating the passing hole with the outside of the hinge dummy (204) and defining a path through which another flexible printed circuit drawn from the folder (102) passes.

11. The camera lens unit of claim 9, further comprising;
a guide hole (347) extending from a predetermined position around an outer circumferential surface of the hinge dummy (304), for communicating the passing hole with the outside of the hinge dummy (304) and defining a path through which another flexible printed circuit drawn from the folder passes;
a rotational guide (351 a) extending from an end of the camera holder (305) and inserted into the hinge dummy (304) to be exposed from the hinge dummy (304) through the guide hole (347); and
a fixing pin (359) fixed onto an outer circumferential surface of the rotational guide (351 a), for exerting a contracting force against a side wall (347b) of the guide hole (347) so as to prevent the camera holder (305) from slipping off from the hinge dummy (304).

12. The camera lens unit according to one of claims 1 to 11, wherein the center hinge arm (125) includes two half portions on opposite sides of the opening (127) and the camera lens (103) includes a support hole (137) formed at another end of the camera lens (103), and a support protrusion (281) is provided at the half portion on the side opposite from the hinge dummy (204), for being rotatably inserted into the support hole (137).

13. The camera lens according to one of claims 1 to 12, further comprising a hinge module inserted into the center hinge arm (125) from the half portion of the center hinge arm (125), for providing a rotation force in an opened direction when the folder is at or above a predetermined angle by a predetermined elastic force and providing a rotation force in a closed direction when the folder is at or below the predetermined angle, wherein the support protrusion (281) is movably installed at an end of the hinge module by a predetermined elastic force to protrude through the other end of the opening.

14. The camera lens unit according to one of claims 1 to 13, further comprising:
an engaging hole (357) formed at a predetermined position of a surface of the camera holder (305); and
an engaging rib (339) protruding from an end of the camera lens (303), for being inserted into the engaging hole (357),
wherein a position where the camera holder (305) is assembled to the camera lens (303) is decided by the engagement of the engaging rib (339) into the engaging hole (357).

15. The camera lens unit according to one of claims 1 to 14, wherein the hinge dummy (304) includes a fixing end protruding a predetermined length along the hinge axis from an end of the hinge dummy (304) and fixed to the side hinge arm (115), the fixing end including a fixing rib (341 a) extending from the end of the hinge dummy (304) and a protrusion (341 b) extending from the end of the hinge dummy, near to the fixing rib.
